# FASCICULE DE BREVET EUROPEEN

(11) **EP 2 210 488 B1**
(45) Date de publication et mention de la délivrance du brevet: **16.08.2017**
(21) Numéro de dépôt: 10150736.6
(22) Date de dépôt: 14.01.2010
(51) Int. Cl.: A01M 1/14

(54) **Piège à insectes**
Insektenfalle
Insect trap

(30) Priorité: 23.01.2009 FR 0950413
(43) Date de publication de la demande: 28.07.2010
(73) Titulaire: Crea, 74130 Bonneville (FR)
(72) Inventeur: BODO, Lionel, 74130 Ayze (FR)
(74) Mandataire: Cabinet Poncet

(56) Documents cités:
- US-A- 1 112 064
- US-A1- 2008 086 932

## Description

La présente invention concerne un piège à insectes.

Les pièges à insectes sont généralement utilisés pour piéger les insectes nuisibles d'une part, et pour surveiller et quantifier les populations d'insectes d'autre part.

On connaît un piège à insectes de forme sensiblement tubulaire à section transversale triangulaire, comportant un espace intérieur délimité par une paroi périphérique ayant au moins une paroi intérieure de fond sensiblement plane et des parois supérieures de toit en carton ou en papier. Un tel piège est par exemple décrit dans le document US 1,112,064. Les faces intérieures des parois sont revêtues d'une matière collante.

Le carton n'est pas un matériau suffisamment résistant aux intempéries, et la simple provision de matière intérieure collante n'assure pas une efficacité optimale du piège.

Afin d'augmenter l'efficacité d'un tel piège, il est connu de déposer un appât sur la paroi inférieure de fond, dans l'espace intérieur du piège.

L'appât peut être de nature solide ou liquide. Celui-ci peut être constitué par un aliment dont les insectes sont friands, ou encore par une phéromone à laquelle sont sensibles les insectes que l'on cherche à piéger.

Il faut alors prévoir des moyens spécifiques de tenue de l'appât, comme il est par exemple décrit dans le document US 2008/0086932, ce qui complique a priori la structure et la mise en oeuvre du piège.

Un problème proposé par la présente invention est de concevoir un piège à insectes à efficacité accrue, peu onéreux à fabriquer, et capable de résister aux intempéries.

Pour atteindre ces objets ainsi que d'autres, l'invention propose un piège à insectes de forme sensiblement tubulaire comportant un espace intérieur délimité par une paroi périphérique ayant au moins une paroi inférieure de fond sensiblement plane et des parois supérieures de toit, ledit piège comportant :
- une feuille à face supérieure adhésive, rapportée sur la paroi inférieure de fond,
- des moyens de suspension aptes à supporter un appât dans l'espace intérieur du piège, les moyens de suspension étant prédécoupés dans l'épaisseur d'une partie de la paroi inférieure de fond qui est recouverte par la feuille à face supérieure adhésive.

La suspension de l'appât dans l'espace intérieur du piège confère une plus grande efficacité au piège. En effet, la suspension de l'appât permet à celui-ci de mieux diffuser les molécules attractives dans l'atmosphère environnante en étant placé dans les courants d'air traversant le piège.

La découpe des moyens de suspension dans l'épaisseur de la paroi de fond ne nuit pas au fonctionnement et à l'efficacité du piège, puisque les moyens de suspension sont découpés dans une partie de la paroi de fond qui est recouverte par la feuille adhésive lorsque le piège est utilisé, ladite feuille adhésive obturant la lumière résultant de la découpe.

Un tel piège est peu onéreux et fort pratique car on évite d'avoir à fabriquer séparément tout ou partie des moyens de suspension.

De préférence, les moyens de suspension peuvent être prédécoupés tout en restant maintenus captifs dans l'épaisseur de la paroi inférieure de fond par de faibles zones de liaison non découpées réparties sur leur périphérie extérieure.

Les moyens de suspension restent ainsi solidaires de la paroi de fond lors de la fabrication du piège, et ce jusqu'à ce qu'un utilisateur vienne les en séparer en rompant les faibles zones de liaison non découpées. On évite tout risque de perte des moyens de suspension.

En alternative, les moyens de suspension peuvent être prédécoupés complètement sur leur périphérie extérieure. Bien que prédécoupés complètement sur leur périphérie extérieure, les moyens de suspension pourront être sensiblement maintenus captifs dans l'épaisseur de la paroi de fond en prévoyant une épaisseur de paroi de fond suffisante, supérieure à environ 4 mm par exemple.

De préférence, les moyens de suspension peuvent comprendre eux-mêmes un récipient à appât.

Ce récipient à appât, prédécoupé dans l'épaisseur d'une partie de la paroi de fond, permet de recevoir et tenir une grande diversité d'appâts dont les formes, les dimensions, les consistances et les éventuels contenants sont très variables.

Avantageusement, le récipient à appât peut comporter une paroi de fond à au moins trois arêtes. Depuis chacune d'elles s'étend respectivement un volet radial destiné à être rabattu par pliage le long de ladite arête correspondante.

Selon un autre mode de réalisation, les moyens de suspension peuvent être conformés pour tenir dans l'espace intérieur du piège un récipient à appât rapporté, fabriqué séparément du piège. Ce récipient à appât rapporté peut être du type de ceux qui sont le plus souvent vendus par les fabricants d'appât, et peut contenir directement l'appât sous forme liquide, gélifiée ou solide. Ce récipient à appât rapporté peut ainsi, par exemple, se présenter sous la forme d'une petite coupelle contenant une substance gélifiée de phéromone animale.

De préférence, les moyens de suspension peuvent être conformés pour se fixer sur les parois autres que la paroi inférieure de fond. La paroi inférieure de fond sur laquelle vient se placer la feuille à face supérieure adhésive n'est ainsi pas inutilement encombrée par la fixation des moyens de suspension, ce qui viendrait diminuer la surface de prise du piège et donc son efficacité.

La fixation des moyens de suspension aux parois autres que la paroi inférieure de fond permet également à l'utilisateur de remplacer facilement la feuille à face supérieure adhésive par une autre feuille à face supérieure adhésive lorsque la première a été utilisée. Un tel remplacement peut être réalisé sans manipulation par l'utilisateur des moyens de suspension et de l'appât, ce qui évite à l'utilisateur d'entrer en contact avec l'appât.

Avantageusement, les moyens de suspension peuvent comporter un outil de suspension avec une extrémité à moyens d'accrochage sensiblement en forme de fourche comprenant au moins trois dents. On préférera notamment une structure de fourche comprenant deux dents latérales s'étendant de part et d'autre d'une dent centrale.

De tels moyens d'accrochage sont simples, fiables et faciles à installer.

De préférence, le piège à insectes peut comporter une section transversale sensiblement triangulaire avec deux parois supérieures de toit s'étendant depuis une zone de faîtage jusqu'à la paroi inférieure de fond. Une telle forme permet l'écoulement de la pluie et évite ainsi à l'humidité de stagner sur le piège et de le détériorer.

De préférence, la paroi inférieure de fond peut comporter deux parois transversales d'extrémité s'étendant depuis et à l'écart de la paroi inférieure de fond en direction des parois supérieures de toit. Ces parois d'extrémité permettent de gêner les insectes qui tenteraient de ressortir de l'espace intérieur du piège, et maintiennent de façon fiable la feuille adhésive dans l'espace intérieur du piège.

Avantageusement, le piège à insectes peut être fabriqué dans une feuille d'un matériau pliable.

Selon un autre aspect, l'invention propose une feuille de matériau pliable comprenant des lignes de découpe et de pliage préformées, la feuille étant configurée de sorte que, une fois coupée et pliée le long de ces lignes de découpe et de pliage, elle est apte à coopérer avec une feuille à face supérieure adhésive pour former un piège à insectes comportant une ou plusieurs des caractéristiques précédemment énoncées.

Cette réalisation sous forme de feuille s'avère très économique, peu encombrante et permet à l'utilisateur final de ranger de façon compacte son piège après utilisation.

La feuille de matériau pliable peut être en carton compact ou ondulé et peut en outre présenter une surface imperméabilisée. En alternative, la feuille de matériau pliable peut être en plastique ou en plastique alvéolaire.

D'autres objets, caractéristiques et avantages de la présente invention ressortiront de la description suivante de modes de réalisation particuliers, faite en relation avec les figures jointes, parmi lesquelles :
- la figure 1 est une vue en perspective éclatée d'un piège à insectes selon un mode de réalisation de l'invention ;
- la figure 2 est une vue en perspective illustrant l'accrochage de moyens de suspension sur le piège ;
- les figures 3 à 5 illustrent différents modes de réalisation des moyens de suspension ; et
- les figures 6 et 7 illustrent des feuilles de matériau pliable utilisées pour fabriquer un piège selon l'invention.

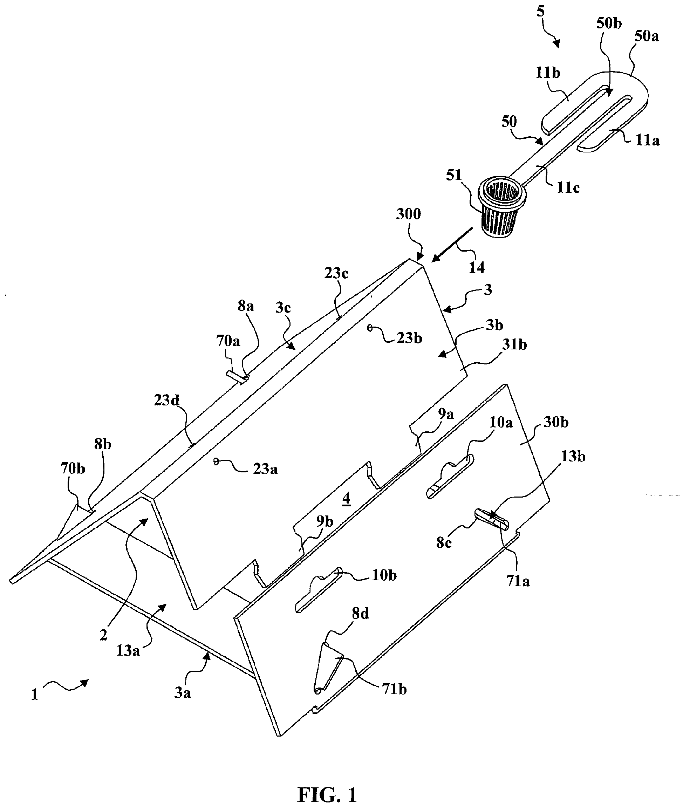

Un exemple de piège à insectes 1 selon l'invention est représenté sur la figure 1 en cours d'assemblage. Le piège à insectes 1 présente une forme sensiblement tubulaire comportant un espace intérieur 2 délimité par une paroi périphérique 3 ayant une paroi inférieure de fond 3a sensiblement plane et des parois supérieures de toit 3b et 3c. La paroi supérieure de toit 3b est formée par la coopération d'un volet inférieur 30b et d'un volet supérieur 31 b.

Une feuille 4 à face supérieure adhésive est rapportée sur la paroi inférieure de fond 3a.

Le piège à insectes 1 comporte également des moyens de suspension 5 aptes à supporter un appât dans l'espace intérieur 2 du piège 1.

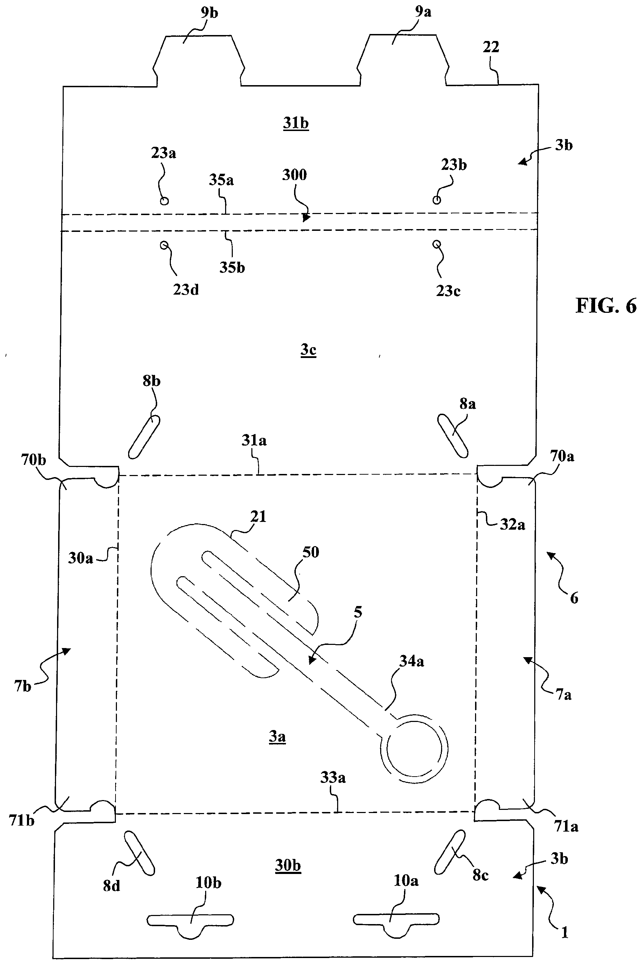

La figure 6 illustre plus particulièrement le piège à insectes 1 de la figure 1 avant sa construction. Le piège à insectes 1 est réalisé sous la forme d'une feuille de matériau pliable 6 comprenant des lignes de pliage 30a, 31a, 32a, 33a, 35a et 35b préformées. La feuille de matériau pliable 6 est limitée en périphérie par un bord 22 périphérique.

Les moyens de suspension 5 représentés sur la figure 1 comprennent un outil de suspension 50, lequel outil de suspension 50 est, comme représenté sur la figure 6, prédécoupé dans l'épaisseur d'une partie de la paroi de fond 3a.

La paroi de fond 3a est délimitée par les lignes de pliage 30a, 31 a, 32a et 33a. Lors de l'utilisation du piège, la paroi inférieure de fond 3a est recouverte par la feuille 4 à face supérieure adhésive qui présente des dimensions semblables et qui vient ainsi recouvrir la partie de la paroi inférieure de fond 3a dans laquelle est prédécoupé l'outil de suspension 50.

Dans le cadre de la figure 6, l'outil de suspension 50 est prédécoupé selon une ligne de découpe 21 discontinue et est donc maintenu captif dans l'épaisseur de la paroi inférieure de fond 3a par de faibles zones de liaison 34a non découpées et réparties sur la périphérie extérieure de l'outil de suspension 50.

L'outil de suspension 50 est ainsi maintenu captif dans l'épaisseur de la paroi inférieure de fond 3a jusqu'à ce qu'un utilisateur rompe les faibles zones de liaison 34a pour utiliser l'outil de suspension afin de supporter un appât dans l'espace intérieur 2 du piège 1.

Afin de construire le piège à insectes 1, après retrait de l'outil de suspension 50, la feuille de matériau pliable 6 est pliée selon les lignes de pliage 35a et 35b en formant une zone de faîtage 300 entre les deux parois supérieures de toit 3b et 3c, et la feuille 4 à face supérieure adhésive est disposée sur la paroi inférieure de fond 3a.

La feuille de matériau pliable est ensuite pliée selon les lignes de pliage 30a, 31a, 32a et 33a en rabattant le volet inférieur 30b et la paroi supérieure de toit 3c l'un vers l'autre.

Simultanément, des volets d'extrémité 7a et 7b sont également rabattus par pliage l'un vers l'autre.

Lors de ce pliage, des lumières 8a à 8d prévues dans les parois supérieures de toit 3b et 3c reçoivent respectivement les coins 70a, 70b, 71 a et 71 b des volets d'extrémité 7a et 7b pour les verrouiller en position pliée (voir figure 1).

Le montage du piège à insectes 1 est achevé par l'engagement et le verrouillage de languettes 9a et 9b d'extrémité, portées par le volet supérieur 31 b, dans des lumières de verrouillage 10a et 10b prévues dans le volet inférieur 30b afin de former la paroi périphérique 3 autour de l'espace intérieur 2.

Le volet supérieur 31 b vient à recouvrement sur le dessus du volet inférieur 30b pour garantir une bonne étanchéité, les languettes 9a et 9b pénétrant de l'extérieur vers l'espace intérieur 2 dans les lumières de verrouillage 10a et 10b.

L'assemblage se fait ainsi sans colle, ce qui augmente la fiabilité car les colles ont tendance à céder au bout d'un certain temps d'utilisation, notamment à la suite d'intempéries. Un tel assemblage permet également de démonter et remonter facilement le piège à insectes 1 sans le détériorer et sans avoir recours à des matériaux supplémentaires (colle, adhésif, agrafe ...), et permet de diminuer les coûts.

Il est à noter que le mode d'assemblage par languette(s) 9a et 9b constitue en lui-même une invention indépendante de l'invention relative au prédécoupage des moyens de suspension 5 dans la paroi inférieure de fond 3a.

Après pliage, le piège à insectes 1 comporte ainsi une section transversale sensiblement triangulaire avec ses deux parois supérieures de toit 3b et 3c s'étendant depuis une zone de faîtage 300 jusqu'à la paroi inférieure de fond 3a. La paroi inférieure de fond 3a comporte quant à elle deux parois d'extrémité 13a et 13b, formées par les volets d'extrémité 7a et 7b, s'étendant depuis et à l'écart de la paroi inférieure de fond 3a en direction des parois supérieures de toit 3b et 3c (figure 1).

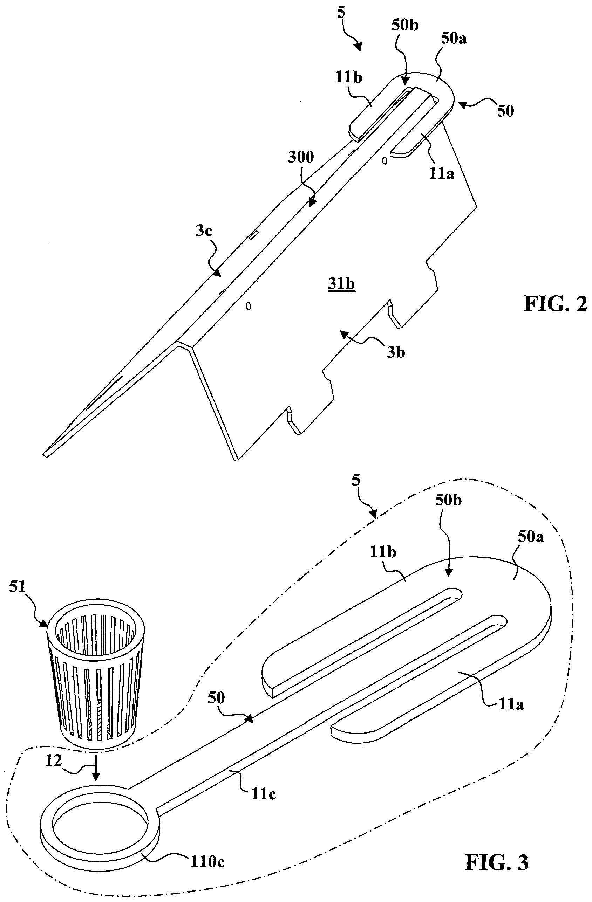

Les moyens de suspension 5 sont ensuite installés dans la position illustrée sur la figure 2, et le piège à insectes 1 est suspendu à une branche d'arbre par des liens souples passant dans des trous de suspension 23a, 23b, 23c, 23d.

Dans un premier mode de réalisation du piège à insectes 1, illustré sur les figures 1 et 6, les moyens de suspension 5 comprennent seulement un outil de suspension 50 prédécoupé dans l'épaisseur de la paroi inférieure de fond 3a. Cet outil de suspension 50, comme illustré sur la figure 3, coopère avec un récipient à appât rapporté 51 qui n'a pas été réalisé par prédécoupage dans l'épaisseur de la paroi inférieure de fond 3a.

L'outil de suspension 50 comprend une extrémité 50a à moyens d'accrochage 50b sensiblement en forme de fourche comprenant au moins trois dents longitudinales. En l'espèce, les moyens d'accrochage 50b conformés en forme de fourche comprennent deux dents latérales 11a et 11b s'étendant de part et d'autre d'une dent centrale 11c.

La dent centrale 11c se prolonge au-delà des extrémités libres des dents latérales 11a et 11b et se termine, à son extrémité libre, par une structure de réception 110c en forme d'anneau. La structure de réception 110c en forme d'anneau est dimensionnée pour recevoir et tenir le récipient à appât rapporté 51 qui y est introduit par un mouvement illustré par la flèche 12.

Après pliage du piège à insectes 1, la dent centrale 11c de l'outil de suspension 50 est engagée axialement dans l'espace intérieur 2 du piège 1 selon le mouvement illustré par la flèche 14 (figure 1). L'outil de suspension 50 est déplacé axialement jusqu'à se trouver dans la position illustrée sur la figure 2 dans laquelle les dents latérales 11 a et 11 b viennent respectivement en appui sur les faces extérieures des parois supérieures de toit 3b et 3c.

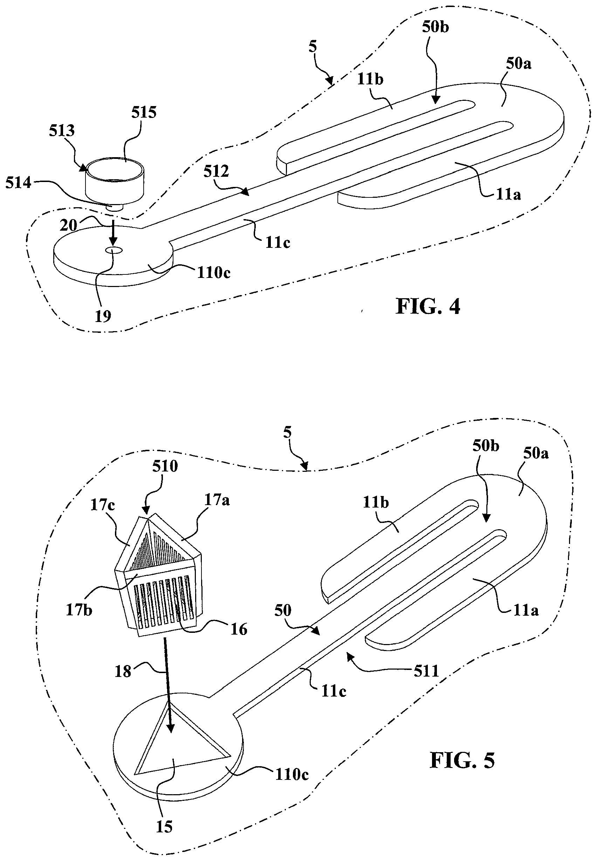

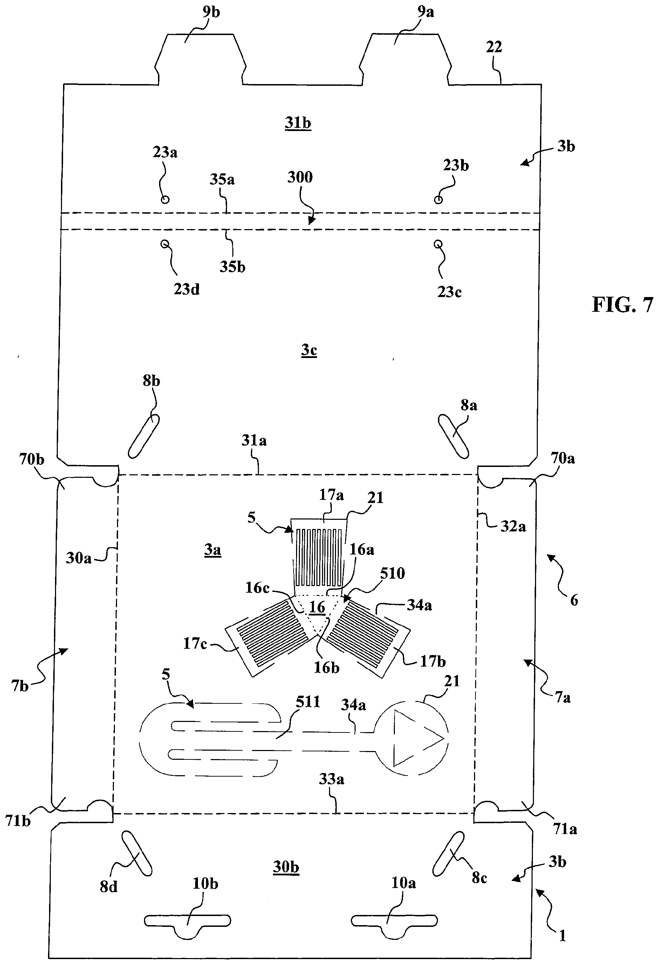

Dans un second mode de réalisation du piège à insectes 1, illustré sur les figures 5 et 7, les moyens de suspension 5 peuvent comprendre un récipient à appât 510 qui est également prédécoupé dans l'épaisseur d'une partie de la paroi inférieure de fond 3a. Les moyens de suspension 5 du piège à insectes 1 de la figure 7 sont plus particulièrement représentés sur la figure 5. Les moyens de suspension 5 comprennent ainsi un récipient à appât 510 et un outil de suspension 511. L'outil de suspension 511 est semblable à l'outil de suspension 50 et diffère de celui-ci en ce qu'il comporte une structure de réception 110c conformée pour recevoir et tenir le récipient à appât 510 au moyen d'une lumière 15 triangulaire.

Le récipient à appât 510 comporte une paroi de fond 16 à au moins trois arêtes 16a, 16b et 16c depuis chacune desquelles s'étend respectivement un volet radial 17a, 17b ou 17c (figure 7). Les volets 17a à 17c sont destinés à être rabattus par pliage le long de leur arête correspondante 16a, 16b ou 16c une fois que le récipient à appât 510 a été retiré de la paroi inférieure de fond 3a (figure 5).

Une fois plié, le récipient à appât 510 présente une forme générale sensiblement en tronc de pyramide qui lui permet de venir se bloquer dans la lumière 15 par une insertion selon un mouvement illustré par la flèche 18.

Le récipient à appât 510 peut être utilisé de la même façon que le récipient à appât rapporté 51 pour recevoir et contenir des appâts de tailles, de présentations et/ou contenants différents, utilisables pour attirer et piéger différents types d'insectes.

Un troisième mode de réalisation est illustré sur la figure 4 : les moyens de suspension 5 comprennent un outil de suspension 512 semblable aux outils de suspension 511 et 50, et qui est également réalisé par prédécoupage dans l'épaisseur d'une partie de la paroi inférieure de fond 3a. Cet outil de suspension 512 diffère en ce qu'il comporte une structure de réception 110c spécialement adaptée pour la réception et la tenue d'un récipient à appât 513 particulier. En l'occurrence, le récipient à appât 513 est un contenant en forme de coupelle 515 munie d'un pion inférieur de fixation 514. La structure de réception 110c de l'outil de suspension 512 comporte une lumière 19 destinée à recevoir le pion inférieur de fixation 514 après une insertion selon un mouvement illustré par la flèche 20.

Le récipient à appât 513 est vendu par les fabricants d'appâts avec la coupelle 515 remplie d'un appât sous forme gélifiée, liquide ou solide.

Dans les premiers et seconds modes de réalisation de l'invention, les récipients à appât 51 et 510 peuvent contenir une grande variété d'appâts contenus dans n'importe quel type de contenants, comme la coupelle 515 par exemple,
tandis que l'outil de suspension 512 est spécialement adapté pour recevoir un appât dans le contenant spécifique qu'est la coupelle 515.

En alternative à ce qui a été décrit précédemment, les moyens de suspension 5 prédécoupés dans l'épaisseur d'une partie de la paroi inférieure de fond 3a peuvent ne comporter qu'un récipient à appât tel que le récipient à appât 510, tandis qu'un outil de suspension, semblable à l'outil de suspension 511, sera fabriqué et fourni séparément, et éventuellement en une autre matière que celle du récipient à appât 510.

Il doit donc être compris que les moyens de suspension 5, prédécoupés dans l'épaisseur d'une partie de la paroi inférieure de fond 3a, peuvent comporter un outil de suspension et/ou un récipient à appât.

Au lieu de prévoir des moyens de suspension 5 prédécoupés restant maintenus captifs dans l'épaisseur de la paroi inférieure de fond 3a par de faibles zones de liaison 34a non découpées, il est possible de prévoir que les moyens de suspension 5 sont découpés complètement sur leur périphérie extérieure. Ceux-ci pourront néanmoins être sensiblement retenus captifs dans l'épaisseur de la paroi inférieure de fond 3a du fait de son épaisseur.

De bons résultats ont été obtenus par l'utilisation d'une feuille 6 en plastique alvéolaire vendue sous la marque AKYLUX, qui est étanche, se plie facilement et est neutre pour les insectes. La neutralité vis-à-vis des insectes (non toxicité) est importante pour ne pas perturber les écosystèmes environnants lors de l'utilisation du piège à insectes 1.

La présente invention n'est pas limitée aux modes de réalisation qui ont été explicitement décrits, mais elle en inclut les diverses variantes et généralisations contenues dans le domaine des revendications ci-après.

## Revendications

1. Piège à insectes (1), de forme sensiblement tubulaire comportant un espace intérieur (2) délimité par une paroi périphérique (3) ayant au moins une paroi inférieure de fond (3a) sensiblement plane et des parois supérieures de toit (3b, 3c), comportant :
- une feuille (4) à face supérieure adhésive, rapportée sur la paroi inférieure de fond (3a),
- des moyens de suspension (5) aptes à supporter un appât dans l'espace intérieur (2) du piège (1), **caractérisé en ce que** les moyens de suspension (5) sont prédécoupés dans l'épaisseur d'une partie de la paroi inférieure de fond (3a) qui est recouverte par la feuille (4) à face supérieure adhésive.

2. Piège à insectes (1) selon la revendication 1, **caractérisé en ce que** les moyens de suspension (5) sont prédécoupés tout en restant maintenus captifs dans l'épaisseur de la paroi inférieure de fond (3a) par de faibles zones de liaison (34a) non découpées réparties sur leur périphérie extérieure.

3. Piège à insectes (1) selon la revendication 1, caractérisé en que les moyens de suspension (5) sont prédécoupés complètement sur leur périphérie extérieure.

4. Piège à insectes (1) selon l'une quelconque des revendications 1 à 3, **caractérisé en ce que** les moyens de suspension (5) comprennent un récipient à appât (510).

5. Piège à insectes (1) selon la revendication 4, **caractérisé en ce que** le récipient à appât (510) comporte une paroi de fond (16) à au moins trois arêtes (16a-16c) depuis chacune desquelles s'étend respectivement un volet radial (17a-17c) destiné à être rabattu par pliage le long de ladite arête correspondante (16a-16c).

6. Piège à insectes (1) selon l'une quelconque des revendications 1 à 3, **caractérisé en ce que** les moyens de suspension (5) sont conformés pour tenir dans l'espace intérieur (2) du piège (1) un récipient à appât rapporté (51, 513).

7. Piège à insectes (1) selon l'une quelconque des revendications 1 à 6, **caractérisé en ce que** les moyens de suspension (5) sont conformés pour se fixer sur les parois autres (3b, 3c) que la paroi inférieure de fond (3a).

8. Piège à insectes selon la revendication 7, **caractérisé en ce que** les moyens de suspension (5) comportent un outil de suspension (50, 511, 512) avec une extrémité (50a) à moyens d'accrochage (50b) sensiblement en forme de fourche comprenant au moins trois dents (11a-11c), de préférence comprenant deux dents latérales (11a, 11b) s'étendant de part et d'autre d'une dent centrale (11c).

9. Piège à insectes (1) selon l'une quelconque des revendications 1 à 8, **caractérisé en ce qu'**il comporte une section transversale sensiblement triangulaire avec deux parois supérieures de toit (3b, 3c) s'étendant depuis une zone de faîtage (300) jusqu'à la paroi inférieure de fond (3a).

10. Piège à insectes (1) selon l'une quelconque des revendications 1 à 9, **caractérisé en ce que** la paroi inférieure de fond (3a) comporte deux parois transversales d'extrémité (13a, 13b) s'étendant depuis et à l'écart de la paroi inférieure de fond (3a) en direction des parois supérieures de toit (3b, 3c).

11. Piège à insectes (1) selon l'une quelconque des revendications 1 à 10, **caractérisé en ce qu'**il est fabriqué dans une feuille d'un matériau pliable (6).

12. Piège à insectes (1) selon l'une quelconque des revendications 1 à 11, **caractérisé en ce que** la paroi périphérique (3) est formée par l'assemblage de volets (30b, 31b) au moyen d'une ou plusieurs languettes (9a, 9b) pénétrant dans des lumières de verrouillage correspondantes (10a, 10b).

13. Feuille de matériau pliable (6) comprenant des lignes de découpe (21) et de pliage (30a-33a ; 35a-35b) préformées, la feuille étant configurée de sorte que, une fois coupée et pliée le long de ces lignes de découpe (21) et de pliage (30a-33a ; 35a-35b), elle est apte à coopérer avec une feuille (4) à face supérieure adhésive pour former un piège à insectes (1) selon l'une quelconque des revendications 1 à 12.

## Patentansprüche

1. Falle (1) für Insekten, die im Wesentlichen röhrenförmig gebildet ist, umfassend einen Innenraum (2), der mittels einer Außenwand (3) abgegrenzt ist, die mindestens eine im Wesentlichen ebene untere Bodenwand (3a) und obere Dachwände (3b, 3c) besitzt, umfassend:
- ein an der Oberseite klebendes Blatt (4), das auf der unteren Bodenwand (3a) getragen ist,
- Aufhängemittel (5), die geeignet sind, einen Köder im Innenraum (2) der Falle (1) zu halten, **dadurch gekennzeichnet, dass** die Aufhängemittel (5) in der Schicht eines Teils der unteren Bodenwand (3a) vorgeschnitten sind, die mit dem an der Oberseite klebenden Blatt (4) bedeckt ist.

2. Falle (1) für Insekten nach Anspruch 1, **dadurch gekennzeichnet, dass** die Aufhängemittel (5) vorgeschnitten sind, während sie in der Schicht der unteren Bodenwand (3a) mittels ungeschnittenen kleinen Verbindungszonen (34a) gehalten verbleiben, die über ihren äußeren Umfang verteilt sind.

3. Falle (1) für Insekten nach Anspruch 1, **dadurch gekennzeichnet, dass** die Aufhängemittel (5) vollständig über ihren äußeren Umfang vorgeschnitten sind.

4. Falle (1) für Insekten nach einem der Ansprüche 1 bis 3, **dadurch gekennzeichnet, dass** die Aufhängemittel (5) einen Köderbehälter (510) umfassen.

5. Falle (1) für Insekten nach Anspruch 4, **dadurch gekennzeichnet, dass** der Köderbehälter (510) eine Bodenwand (16) mit wenigstens drei Kanten (16a-16c) umfasst, wobei sich von jeder entsprechend eine Klappe (17a-17c) radial erstreckt, die eingerichtet sind, durch Biegen entlang einer entsprechenden der genannten Kanten (16a-16c) abgebogen zu werden.

6. Falle (1) für Insekten nach einem der vorstehenden Ansprüche 1 bis 3, **dadurch gekennzeichnet, dass** die Aufhängemittel (5) eingerichtet sind, im Innenraum (2) der Falle (1) einen Behälter für den getragenen Köder (51, 513) zu halten.

7. Falle (1) für Insekten nach einem der Ansprüche 1 bis 6, **dadurch gekennzeichnet, dass** die Aufhängemittel (5) eingerichtet sind, sich an den anderen (3b, 3c) als der unteren Bodenwand (3a) befestigen zu lassen.

8. Falle (1) für Insekten nach Anspruch 7, **dadurch gekennzeichnet, dass** die Aufhängemittel (5) ein Haltegerät (50, 511, 512) mit einem Ende (50a) umfassen, die mit Koppelmitteln (50b) im Wesentlichen in Form einer Gabel verbunden sind, die mindestens drei Zähne (11a-11c), vorzugsweise zwei seitliche Zähne (11a, 11b) umfasst, die sich an beiden Seiten eines mittigen Zahns (11c) erstrecken.

9. Falle (1) für Insekten nach einem der Ansprüche 1 bis 8, **dadurch gekennzeichnet, dass** sie einen im Wesentlichen dreieckigen Querabschnitt mit den zwei oberen Dachwänden (3b, 3c) besitzt, die sich von einer Dachfirst-Zone (300) aus bis zur unteren Bodenwand (3a) erstrecken.

10. Falle (1) für Insekten nach einem der Ansprüche 1 bis 9, **dadurch gekennzeichnet, dass** die untere Bodenwand (3a) an ihren Enden zwei Querwände (13a, 13b) umfasst, die sich ab und mit einem Abstand der unteren Bodenwand (3a) in Richtung der oberen Dachwände (3b, 3c) erstrecken.

11. Falle (1) für Insekten nach einem der Ansprüche 1 bis 10, **dadurch gekennzeichnet, dass** sie hergestellt ist aus einem Blatt aus einem faltbaren Material (6).

12. Falle (1) für Insekten nach einem der Ansprüche 1 bis 11, **dadurch gekennzeichnet, dass** die Außenwand (3) durch das Zusammensetzen von Klappen (30b, 31b) mittels mehrerer Zungen (9a, 9b) gebildet ist, die durch entsprechende Verriegelungsöffnungen (10a, 10b) geführt sind.

13. Blatt aus einem faltbaren Material (6), umfassend vorgefertigte Schnitt- (21) und Faltlinien(30a-33a; 35a-35b), wobei das Blatt derart eingerichtet ist, dass wenn es entlang der Schnitt-(21) und Faltlinien(30a-33a; 35a-35b) geschnitten und gefaltet ist, es geeignet ist, mit einem an der Oberseite klebenden Blatt (4) bedeckt zu werden, um eine Falle für Insekten (1) nach einem der Ansprüche 1 bis 12 zu bilden.

## Claims

1. Insect trap (1) of substantially tubular shape, comprising an inner space (2) delimited by a peripheral wall (3) having at least one substantially plane lower base wall (3a) and upper roof walls (3b, 3c), comprising:
- a sheet (4) with an adhesive upper face, which is attached to the lower base wall (3a),
- suspension means (5) for supporting bait within the inner space (2) of the trap (1), **characterized in that** the suspension means (5) are pre-cut within the thickness of a part of the lower base wall (3a) which is covered by the sheet (4) with the adhesive upper face.

2. Insect trap (1) according to claim 1, **characterized in that** the suspension means (5) are pre-cut while being held captive within the thickness of the lower base wall (3a) via weak connection zones (34a) which are not cut and which are distributed on the outer periphery thereof.

3. Insect trap (1) according to claim 1, **characterized in that** the suspension means (5) are pre-cut completely on their outer periphery.

4. Insect trap (1) according to any one of claims 1 to 3, **characterized in that** the suspension means (5) comprise a bait receptacle (510).

5. Insect trap (1) according to claim 4, **characterized in that** the bait receptacle (510) has a base wall (16) with at least three ridges (16a-16c) from each of which there extends respectively a radial flap (17a-17c) intended to be turned back by folding along said corresponding ridge (16a-16c).

6. Insect trap (1) according to any one of claims 1 to 3, **characterized in that** the suspension means (5) are configured to retain an attached bait receptacle (51, 513) within the inner space (2) of the trap (1).

7. Insect trap (1) according to any one of claims 1 to 6, **characterized in that** the suspension means (5) are configured to fix themselves to the walls (3b, 3c) other than the lower base wall (3a).

8. Insect trap according to claim 7, **characterized in that** the suspension means (5) comprise a suspension tool (50, 511, 512) with an end (50a) having fastening means (50b) substantially in the shape of a fork with at least three teeth (11a-11c), preferably comprising two lateral teeth (11a, 11b) extending on either side of a central tooth (11c).

9. Insect trap (1) according to any one of claims 1 to 8, **characterized in that** it has a substantially triangular cross section with two upper roof walls (3b, 3c) that extend from a roof ridge zone (300) as far as the lower base wall (3a).

10. Insect trap (1) according to any one of claims 1 to 9, **characterized in that** the lower base wall (3a) comprises two transverse end walls (13a, 13b) extending from, and spaced apart from, the lower base wall (3a) in the direction of the upper roof walls (3b, 3c).

11. Insect trap (1) according to any one of claims 1 to 10, **characterized in that** it is made from a sheet of foldable material (6).

12. Insect trap (1) according to any one of claims 1 to 11, **characterized in that** the peripheral wall (3) is formed by joining together flaps (30b, 31b) by means of one or more tongues (9a, 9b) that engage in corresponding locking slits (10a, 10b).

13. Sheet of foldable material (6) comprising pre-formed cutting lines (21) and folding lines (30a-33a ; 35a-35b), the sheet being configured in such a way that, once cut and folded along these cutting lines (21) and folding lines (30a-33a ; 35a-35b), it is able to cooperate with a sheet (4) having an adhesive upper face in order to form an insect trap (1) according to any one of claims 1 to 12.
